Europäisches Patentamt

European Patent Office

Office européen des brevets

(11) Publication number: **0 246 707 B1**

## EUROPEAN PATENT SPECIFICATION

(45) Date of publication of patent specification: **07.08.91**

(21) Application number: **87200935.2**

(22) Date of filing: **19.05.87**

(51) Int. Cl.⁵: **A22C 17/00, A23B 4/02, A23B 4/14**

(54) **Apparatus for injecting meat with a substance, in particular a substance of a paste-like consistency.**

(30) Priority: **23.05.86 NL 8601328**

(43) Date of publication of application:
**25.11.87 Bulletin 87/48**

(45) Publication of the grant of the patent:
**07.08.91 Bulletin 91/32**

(84) Designated Contracting States:
**BE DE ES FR GB IT NL**

(56) References cited:
**FR-A- 2 373 233     US-A- 2 628 552**
**US-A- 2 670 673     US-A- 4 029 824**
**US-A- 4 254 151     US-A- 4 356 762**

(73) Proprietor: **LANGEN RESEARCH B.V.**
**Beversestraat 4**
**NL-5431 SH Cuyk(NL)**

(72) Inventor: **Langen, Christianus Petrus**
**11, Zandkampen**
**NL-5431 BB Cuijk(NL)**
Inventor: **Langen, Johannes Christina**
**56, Jan van Cuijkstraat**
**NL-5431 GC Cuijk(NL)**

(74) Representative: **Hoorweg, Petrus Nicolaas et al**
**OCTROOIBUREAU ARNOLD & SIEDSMA**
**Sweelinckplein 1**
**NL-2517 GK The Hague(NL)**

Note: Within nine months from the publication of the mention of the grant of the European patent, any person may give notice to the Eurcpean Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an apparatus for injecting a substance into a portion of meat, in particular a paste-like substance, said apparatus comprising a base plate carrying a plurality of hollow needles in parallel relationship to eachother, a plurality of measuring chambers associated with each needle, said chambers being closable by sealing means with respect to a commom supply conduit, on the one hand and with respect to the channel of the needle, on the other hand.

An apparatus of the above kind disclosed in US-A-2.628.552 is generally used for the injection of curing fluid, the meat being brought into contact with the group of needles one or repeatedly. For the purpose of distributing the substance to be injected from the common supply conduit to the various needle channels, a system of channels is incorporated in the base, such that as uniform a distribution to the needles as possible is obtainable, in order to provide the needles with as uniform possible a quantity of injectable substance at each injection operation. During the injection of paste-like substances, the danger arises that the needles giving the least resistance to supplying will be offered the greatest quantity of the substance, while the other needles obtain none or too little of the paste-like substance.

The invention has for its aim to overcome the above drawback and provides to that end an apparatus which is distinguished in that said base plate and a closing plate are arranged such that a space is formed therebetween, each needle is fitted in a substantially cylindrical holder projecting into said space, whereas said sealing means comprise a membrane layer covering the top and at least partially the side of the holder facing away from the needle, so dividing said space in order to form said plurality of measuring chambers.

Owing to the measuring chamber it is now possible to fill the measuring chamber during the period in which the needle is not in contact with the meat, a defined quantity of substance being accumulated near to the needle. As soon as the needle is in contact with the meat, the measuring chamber can be discharged by bringing it into communication with the needle channel. By this means a constant quantity of injectable substance is guaranteed for each needle.

It is noticed that a membrane layer is known per se from US-A-4.356.762, however, this layer will not form a plurality of measuring chamers.

The invention will be further elucidated by reference to the detailed description herebelow of embodiments.

In the drawing:

Figure 1 shows a perspective top view of a meat-massage machine provided with an injection apparatus according to the invention;

figure 2 shows a schematic perpendicular side view of the apparatus of figure 1;

figure 3 shows a perpendicular cross section along the line III-III in figure 1 of a part of the injection apparatus according to a first embodiment of the invention;

figure 4 shows a perspective top view, partly in cross section, of the apparatus of figure 3, with dismantled components;

figure 5 shows, on an enlarged scale, an axial cross section of the needle with needle holder from figure 3;

figure 6 shows a cross section corresponding to figure 5 of an alternative embodiment of the pump chamber.

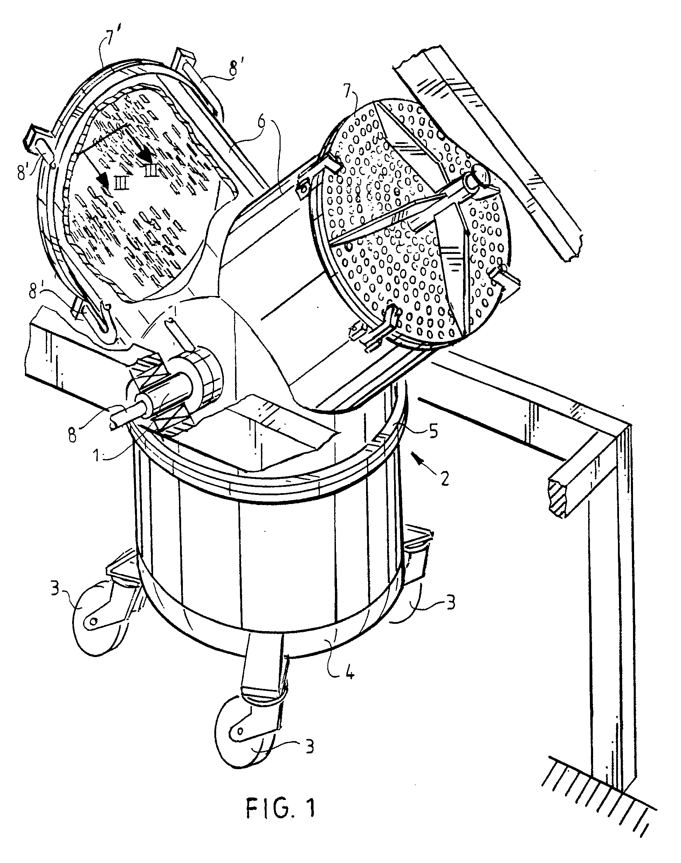

The apparatus shown in figure 1 consists substantially of a vessel 2 rotatable around shaft 1, said vessel consisting of three cylindrical sections which project radially with respect to shaft 1. The bottom section in figure 1 is a detachable tub 4 equipped with running wheels 3, in which the portion of meat to be treated is stored.

Tub 4 is connected to the other section by a flanged joint 5. These other sections 6 are also cylindrical and are each provided with a closing cap 7 on the side facing away from axle 1. Each cap comprises a plurality of inward directed needles, at least those of section 7' being executed as hollow needles. These features will be explained below in more detail.

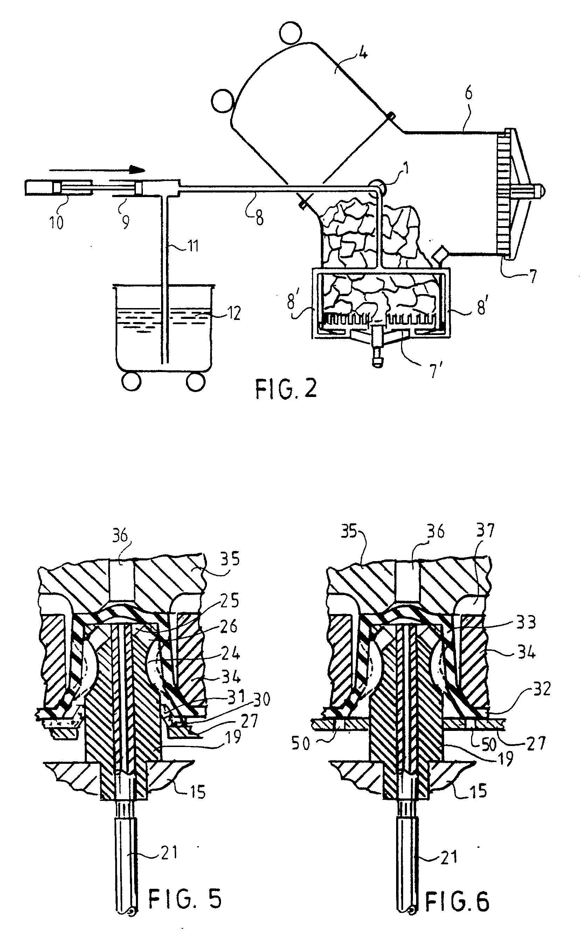

Since vessel 2 can be turned around axle 1, it will be clear that the portion of meat which was originally situated in tub 4 will repeatedly proceed into another section under the influence of gravity, whereby it will be brought into contact with the needles of caps 7 (see also figure 2).

The needles of cap 7' communicate via a system of channels incorporated in the cap with a common supply conduit 8 which is fed by a plunger pump 9 which is driven by a hydraulic or pneumatic cylinder 10. The plunger pump communicates with a supply conduit 11 which projects into a supply vessel 12 for the medium to be injected, for instance a paste-like substance.

The above-described massage/injection machine is known per se and is regarded as being equally known in respect of its functioning, so a complete description is considered to be superfluous here.

Cap 7' is equipped with hollow needles which serve for the injection of the paste-like substance in vessel 12.

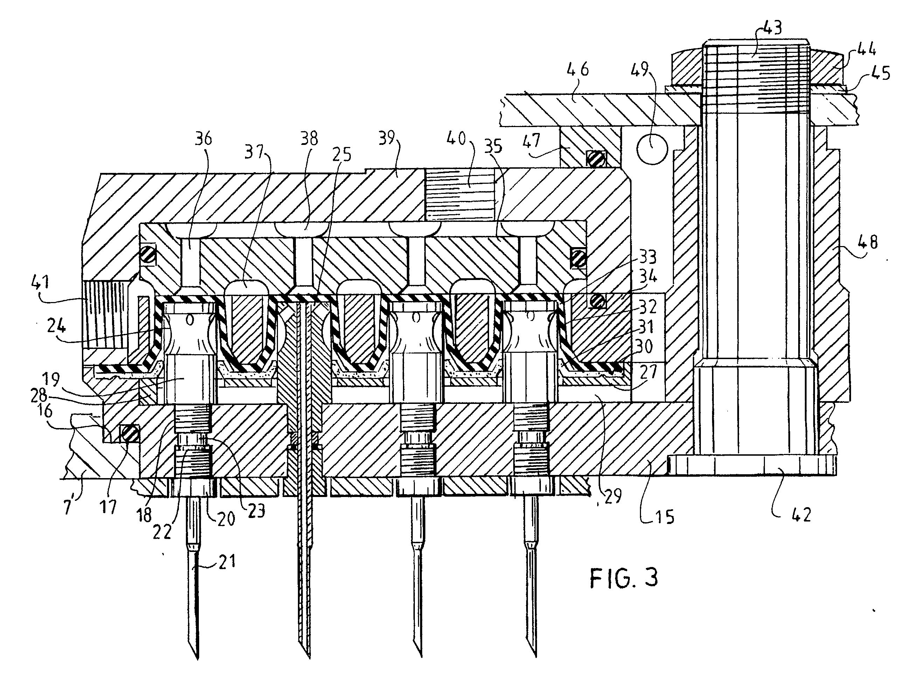

These hollow needles are fed by common supply conduit 8, which branches into four supply conduits 8' (see also figure 2) which each leads to a group of hollow needles in a circular needle base 15 (see figure 3). Four of these needle bases 15 are thus incorporated in cap 7'. Branch conduit 8' communicates with a centrally arranged hub-shaped part of base 15. Each needle base 15 is circular and fits into a circular aperture of cap 7. To that end circular baseplate 15 is made with an outwardly directed flange 16, which rests on an inward-jutting flange of the aperture in cap 7. A sealing ring 17 is arranged between the two flange surfaces. The plate is executed in a regular arrangement with threaded holes into which a threaded part 18 of needle holder 19 can be turned. A hollow locknut 20 is screwed into the threaded hole of plate 15 on the underside. A hollow needle 21 passes through the needle holder and locknut 20, this needle being securely joined to the needle holder at the top. The passage along the threaded hole in plate 15 is sealed by an O-ring 22 incorporated above locknut 20, said O-ring being held under pressure by a spacer tube 23 which rests in contact with the under surface of screw 18 of needle holder 19. Needle holder 19 is reduced on the outside of its upper half at 24 in a diabolo shape, and its top surface is executed with a conical cavity 25 (see also figure 5). The diabolo-shaped cavity 24 communicates with conical cavity 25 via one or more passages 26.

On base plate 15, at some distance above it, a membrane support plate 27 is arranged. This plate has a pattern of holes corresponding to that of plate 15, such that the needle holders can pass through it. Plate 27 is made along its outer circumference with a flanged edge 28 of such height that a space results between the two plates, which space serves as a supply space for the paste-like substance and stands to that end in communication with branch conduit 8', as will be described further below. Plate 27 supports a first membrane 30 of flexible material, for instance neoprene. This membrane is also made with a corresponding pattern of holes, there being formed however a cylindrical lip 31 around each hole, said lip making close contact with the smooth cylindrical outer shell of needle holder 19.

On first membrane 30, a second membrane 32 of similar flexible material is placed. This membrane too has a corresponding pattern of holes, each hole being however covered by an upward protuberance 33 with a closed top wall. By this means a completely closed membrane results, through which no transport of a medium can take place. The top wall is flat and fit closely on the top surface of needle holder 19, such that part 24 of needle holder 19 is entirely surrounded by protruding part 33 of membrane 32.

The space between the protruding parts 33 of membrane 32 is filled by a filler plate 34 which again has the same pattern of apertures. However, the apertures have a larger diameter than that of needle holder 19, so that a certain volume results between them.

Finally, a closing plate 35 is placed on filler plate 34, said closing plate being provided with a number of channels 36 in a pattern such that each channel 36 is disposed exactly in the extension of each needle 21. Further, the underside of plate 35 is made with cavities 37 which are segregated from channels 36, the pattern of said cavities 37 being such that these are in communication with the space between the filler plate and needle holder 19 (see figure 3).

The top surface of plate 35 is also provided with a pattern of cavities 38 which are in communication with channels 36.

All the plates are cover at the top by cap plate 39 which rests with sealing effect on filler plate 34 close to the hub of base 15, and along its outer edge rests with sealing effect on an outward disposed flange of the two membranes 30, 32 and is supported on the outer edge of base plate 15.

Cap plate 39 is provided with a connection opening 40 which communicates with cavities 38 and thus with channels 36, and also with a connection opening 41 which communicates with cavities 37 and therefore with the space above membrane 32 and within filler plate 34.

All the plates are pressed against one another by means of a central tension post 42 whose head lies in a chamber on the underside of plate 15, its shank extending upwards and terminating in a threaded portion 43, upon which a nut 44 can be screwed. Nut 44 rests via a washer 45 on a pressure arm 46 which rests via a ring 47 on cap plate 39. On tightening of nut 44, all the plates are pressed together, this being done in such a way that the sealing rings segregate the spaces from one another. An annular space is also formed around hub 48 of plate 15, which is arranged around post 42, and inside the inner edges of the plates, said annular space communicating with space 29. The annular space communicates via opening 49 with branch conduit 8'.

The above-described embodiment works as follows.

Through the feeding of a paste-like substance via a branch conduit 8' to opening 49, the space around hub 48 fills up with the paste-like substance, as does also space 29, located beneath support plate 27. The paste-like substance is forced via the space between plate 27 and needle holder 19 upwards past lip 31 of membrane 30. In this way the whole space between needle holder 19 and the interior of cylindrical protruding portion 34 of membrane 32 is filled with the paste-like substance, while the side-wall of part 33 is pushed back against filler plate 34. This situation is indicated in figure 5. Through the maintenance of a certain air pressure via connection opening 40, said pressure is exerted via channels 36 on the top wall of protruding part 33, which seals off the top surface of needle holder 19 and the entrance aperture of needle 21 (see the position in figure 3). This pressure is sufficient to exceed the pressure of the paste-like substance, and the entrance to needle 21 is therefore blocked.

After the entire dose-measuring chamber formed by membrane 33 and the needle holder has been filled, a determinate quantity of paste-like substance will have accumulated around the needle holder.

When the feeding of paste-like substance via opening 49 has stopped, the paste-like substance held in that chamber can not flow back on account of the sealing effect of membrane 30.

This situation is maintained until an air pressure is supplied via inlet opening 41 to channels 37. This air pressure, greater than the air pressure in channel 36, provides a pumping effect on the outer wall of protruding parts 33 of membrane 32, said wall being forced in the direction of the needle holder (see the position of this wall indicated by broken lines in figure 5). The mass of paste-like substance which has accumulated around needle holder 19 is pressed via passage 26 towards conical space 25, and the top wall part of part 33 of membrane 32 bulges upwards so that the entrance to the channel of needle 21 is freed. The paste-like mass is thus forced out of the chamber around needle holder 19 into needle 21.

After the completion of the injection process, the pressure applied to supply opening 41 can be taken off and the new supply of paste-like substance can take place via conduit 8', whereby the above-described process repeats itself.

From the above, it will be clear that a dose-measuring chamber with a fixed volume is formed for each needle, which ensures that all the needles receive the same quantity of paste-like substance to transfer during injection. By this means a situation is prevented from occurring where the rightmost needle in figure 3 could receive more paste-like substance to transfer than the needles situated more to the left thereof.

Figure 6 shows an alternative embodiment in which the first membrane 30 is omitted. Support plate 27 makes direct contact with the cylindrical shell of needle holder 19, while passages 50 have been drilled at a certain distance around the needle holder. These drillings are closed off by membrane 32.

For the filling of the chamber around needle holder 19, paste-like substance, which arrives via holes 50 above plate 27 by the pushing up of membrane 32, is again fed into space 29.

As soon as air pressure is admitted into space 37 holes 50 become sealed by membrane 32, and the dose-measuring chamber can be discharged in the manner described above.

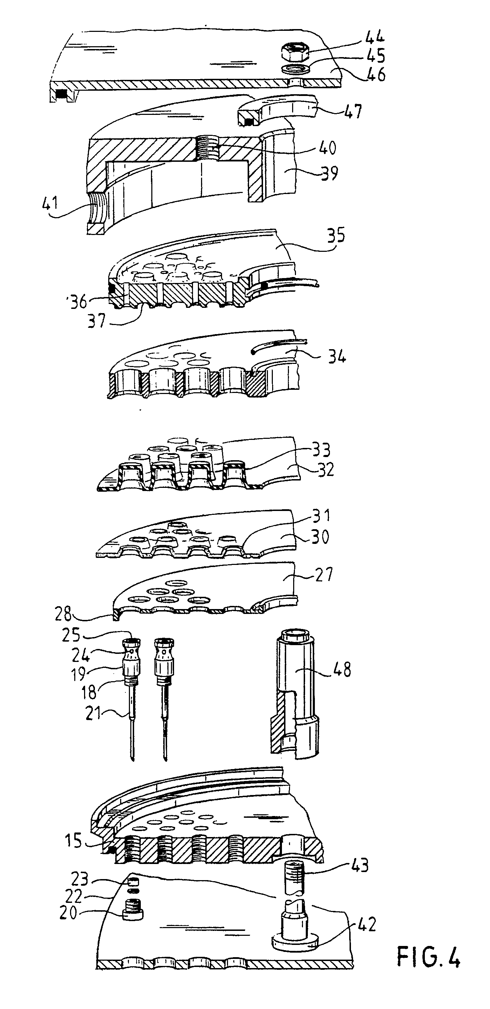

From the above, it will be clear that the entire apparatus is easy to dismantle and is therefore easy to clean. Dismantling and assembly take place in the sequence indicated in figure 4.

## Claims

1. An apparatus for injecting a substance into a portion of meat, in particular a paste-like substance, said apparatus comprising a base plate (15) carrying a plurality of hollow needles (21) in parallel relationship to eachother and fitted in a substantially cylindrical holder (19), a plurality of measuring chambers associated with each needle, said chambers being closable by sealing means with respect to a commom supply conduit, on the one hand and with respect to the channel of the needle, on the other hand, **characterized** in that said base plate (15) and a closing plate (35) are arranged such that a space is formed therebetween, each needle (21) fitted in said cylindrical holder (19) projects into said space, whereas said sealing means comprise a membrane layer (32) covering the top and at least partially the side of the holder facing away from the needle, so dividing said space in order to form said plurality of measuring chambers.

2. An apparatus as claimed in claim 1, **characterized** in that the space between the base plate (15) and the closing plate (35) is filled up by a filler plate (34) arranged on the side of the membrane (32) facing away from the needle holders (19).

3. An apparatus as claimed in claim 1 or 2, **characterized** in that a supporting plate (27) is arranged between the base plate (15) and the membrane (32).

4. An apparatus as claimed in claim 3, **characterized** in that the supporting plate (27) is equipped with a closable passage opening.

5. An apparatus as claimed in claim 4, **characterized** in that between the membrane (32) and the supporting plate (27) a second sealing membrane (30) is arranged, which cooperates with the cylindrical outer face of the needle holder (19).

6. An apparatus as claimed in any of the foregoing claims, **characterized** in that the closing plate (35) is provided with two channel sections, each provided with a separate supply opening (40, 41) for a pressure medium, in order to periodically load mutually segregated parts of the surface of the membrane (32) on the side facing away from the needle holder (19).

**Revendications**

1. Appareil servant à injecter une substance dans un morceau de viande, en particulier une substance pâteuse, ledit appareil comprenant une plaque de base (15) qui porte une pluralité d'aiguilles creuses (21) parallèles entre elles et équipées chacune d'un porte-aiguille sensiblement cylindrique (19), une pluralité de chambres de mesure respectivement associées aux aiguilles, lesdites chambres pouvant être isolées, d'une part, d'un conduit d'alimentation commun et, d'autre part, de la lumière de l'aiguille, par des moyens obturateurs, caractérisé en ce que la plaque de base (15) et une plaque de fermeture (35) sont agencées de telle manière qu'il se forme un espace entre ces plaques, chaque aiguille (21) étant équipée d'un porte-aiguille cylindrique (19) qui fait saillie dans ledit espace, tandis que lesdits moyens obturateurs comprennent une couche membraneuse (32) qui recouvre la face supérieure et au moins le côté du porte-aiguille qui est éloigné de l'aiguille, en divisant ainsi cet espace de manière à former ladite pluralité de chambres de mesure.

2. Appareil selon la revendication 1, caractérisé en ce que l'espace compris entre la plaque de base (15) et la plaque de fermeture (35) est comblé par une plaque de remplissage (34) disposée sur le côté de la membrane (32) qui est le plus éloigné des porte-aiguilles (19).

3. Appareil selon la revendication 1 ou 2, caractérisé en ce qu'une plaque support (27) est agencée entre la plaque de base (15) et la membrane (32).

4. Appareil selon la revendication 3, caractérisé en ce que la plaque support (27) est équipée d'une ouverture de passage obturable.

5. Appareil selon la revendication 4, caractérisé en ce qu'entre la membrane (32) et la plaque support (27), est disposée une deuxième membrane de fermeture étanche (30) qui coopère avec la face extérieure cylindrique du porte-aiguille (19).

6. Appareil selon une quelconque des revendications précédentes, caractérisé en ce que la plaque de fermeture (35) est munie de deux sections de canaux, dont chacune est munie d'une ouverture d'alimentation séparée (40,41) destinée à recevoir un milieu sous pression, afin de charger périodiquement des parties isolées de la surface de la membrane (32) située sur le côté le plus éloigné du porte-aiguille (19).

**Patentansprüche**

1. Apparat zum Einspritzen einer Substanz in eine Portion Fleisch, insbesondere einer Substanz von teigiger Konsistenz, mit einer Basisplatte (15), die eine Anzahl von hohlen Nadeln (21) trägt, die parallel zueinander angeordnet und in einem wesentlichen zylindrischen Halter (19) befestigt sind, einer Anzahl von Meßkammern, die jeweils jeder Nadel zugeordnet sind und die einerseits gegenüber einer gemeinsamen Zuführleitung und andererseits bezogen auf den Nadelkanal durch Abdichtmittel schließbar sind, dadurch **gekennzeichnet** , daß die Basisplatte (15) und eine Schließplatte (35) so angeordnet sind, daß zwischen diesen ein Zwischenraum gebildet wird, und daß jede Nadel (21), die in dem zylindrischen Halter (19) befestigt ist, in diesen Zwischenraum vorsteht, während die Abdichtmittel eine Membranschicht (32) aufweisen, die die Oberseite und wenigstens teilweise die von der Nadel abgewandte Seite des Halters bedeckt, wodurch der Zwischenraum unterteilt wird, um die Anzahl der Meßkammern zu bilden.

2. Apparat nach Anspruch 1, dadurch **gekennzeichnet,** daß der Zwischenraum zwischen Basisplatte (15) und Schließplatte (35) durch eine Abstandsplatte (34) ausgefüllt ist, die an der von dem Nadelhalter (19) abweisenden Seite der Membran (32) angeordnet ist.

3. Apparat nach Anspruch 1 oder 2, dadurch **gekennzeichnet,** daß zwischen der Basisplatte (15) und der Membran (32) eine Stützplatte (27) angeordnet ist.

4. Apparat nach Anspruch 3, dadurch **gekennzeichnet,** daß die Stützplatte (27) mit einer schließbaren Durchlaßöffnung versehen ist.

5. Apparat nach Anspruch 4, dadurch **gekennzeichnet,** daß zwischen Membran (32) und Stützplatte (27) eine zweite Abdichtmembran (30) angeordnet ist, die mit der zylindrischen Außenseite des Nadelhalters (19) zusammenwirkt.

6. Apparat nach jedem der vorstehenden Ansprüche, dadurch **gekennzeichnet,** daß die Schließplatte (35) mit zwei Kanalabschnitten versehen ist, die jeweils mit einer separaten Zuführöffnung (40,41) für ein Druckmedium versehen sind, um periodisch beiderseits abgesonderte Teile der Oberfläche der Membran (32) auf die vom Nadelhalter (19) abgewandte Seite zu laden.

FIG. 1

FIG. 2

FIG. 5

FIG. 6

FIG. 3

EP 0 246 707 B1

FIG. 4